# EUROPEAN PATENT SPECIFICATION

(11) **EP 2 487 870 B1**
(45) Date of publication and mention of the grant of the patent: **31.07.2013**
(21) Application number: 11305149.4
(22) Date of filing: 11.02.2011
(51) Int. Cl.: H04L 29/08, H04L 29/12

(54) **Method for naming sensor devices in a local network, service gateway and remote management server**
Verfahren zur Benennung von Sensorvorrichtungen in einem Lokalnetz, Dienst-Gateway und Fernverwaltungsserver
Procédé pour nommer des dispositifs capteurs dans un réseau local, passerelle de service et serveur de gestion à distance

(43) Date of publication of application: 15.08.2012
(73) Proprietor: Alcatel Lucent, 75007 Paris (FR)
(72) Inventor: Liekens, Werner, 2860, Sint-Katelijne-Waver (BE); Vermoesen, Luc, 2880, Bornem (BE)
(74) Representative: ALU Antw Patent Attorneys

(56) References cited:
- WO-A2-2007/079279
- US-A1- 2006 190 458
- US-A1- 2006 239 190

## Description

### Technical field

The present disclosure relates to the field of methods for naming and authorising sensor devices in a local network, as for instance a home network.

### Background

In domotics systems, sensor devices are typically added to the home environment. These sensor devices can communicate by means of a wide range of available communication technologies with a service gateway, and need to be authenticated before being allowed into the home network. Sensor typically have a unique MAC address identifier, which is not a clear identification for an average user. Therefore it is preferred to give sensor devices in the home a name which is easily recognized by the user.

Today, different methods for naming sensor devices exist. For instance a web-interface can be used. The presence of a PC is then required. According to another solution, the names can be automatically generated, which typically results in unclear naming.

Patent application WO2007/079279 describes a solution in which a command module assigns names to sensor devices.

### Summary

It is an object of embodiments of the present invention, to provide an alternative method for naming and authorising sensor devices.

According to a first aspect of the present disclosure, a method is disclosed for associating name information to a sensor device in a local network, the local network being connected to an access network by means of a service gateway, and the service gateway being adapted for communicating with the sensor device, comprising performing at the service gateway:
- receiving sensor identification information for the sensor device;
- forwarding the sensor identification information to a mobile device of a user, through a wireless telecommunication network;
- receiving naming information for the sensor device from the mobile device through the telecommunication network;
- storing the naming information for the sensor device.

The method allows naming sensor devices in the local network by means of a mobile device, such as a mobile phone or PDA, over a mobile network. No personal computer is thus necessary, and the user can easily give a name to the sensor. The user can do this remotely, e.g. when not being in a home associated to said local network.

According to preferred embodiments, the method further comprises :
- retrieving contact information for the mobile device;
- forwarding sensor identification information to the mobile device, based on the contact information.

The service gateway can therefore for instance consult a memory or name server, comprising said contacting information, as for instance the mobile phone number of the mobile device. The memory or name server may also comprise authorization capability information for the mobile device. The authorization capability information can for instance define which type of authorization technology the mobile device is supporting.

According to preferred embodiments, the method further comprises forwarding a request for receiving authentication information for the sensor device, to the mobile device, and receiving the authentication information. These steps can for instance be based on the authorization capability information.

The result of these steps is that a user can easily authorize a sensor node to access his local, e.g. home network.

According to preferred embodiments, the forwarding a request for receiving authentication information and forwarding the sensor identification information are performed at the same time, and wherein receiving naming information and receiving the authentication information are performed at the same time.

This reduces the number of interaction with the mobile device and user.

According to preferred embodiments, forwarding the sensor identification information to a mobile device, and receiving naming information for the sensor device from the mobile device comprises sending and receiving text messages, such as SMS or email. Text messages can easily be communicated, by means of state of the art technology. Therefore use can be made of a message-gateway as for instance an SMS gateway or email-gateway. A user can easily read and generate such type of messages on state of the art mobile devices. According to alternative embodiments of the first aspect of the present disclosure, the method comprises
- sending service gateway identification information and the sensor identification information to a remote management server, for performing authentication for the sensor device, based on the service gateway identification information and the sensor identification information, and, if it is found that the sensor can be authenticated, for retrieving contact information for the mobile device, based on service gateway information, and for interacting with the mobile device in order to retrieve sensor naming information, by the remote management server; and
- receiving at least one of authentication information and naming information for the sensor device from the remote management server.

According to this type of embodiments, the authorization process is diverted to a remote management server for the service gateway. The remote management server may then take care of the authorization before an interaction is set up with the mobile device, in which naming information is retrieved from the user. The service gateway can than receive at least one of authentication information and naming information from the remote management server.

According to preferred embodiments, interacting with the mobile device in order to retrieve sensor naming information by the remote management server, comprises exchanging text messages with the mobile device.

Also here, interacting with the mobile device in order to retrieve sensor naming information by the remote management server can comprise sending and receiving text messages, such as SMS or email. Again, use can be made of a message-gateway as for instance an SMS gateway or email-gateway.

According to preferred embodiment of the present disclosure, the method further comprises interfacing with the user using the naming information for referring to the sensor device. As the naming information has been actively provided by the user, no doubt should exist on which sensor device is corresponding to which sensor device.

According to a second aspect of the present disclosure, a service gateway is described for use as a gateway between a local network being connected to an access network, the local network comprising at least one sensor device, wherein the service gateway is adapted for;
- communicating with the sensor device;
- receiving sensor identification information for the sensor device;
- forwarding the sensor identification information to a mobile device associated to a user through a wireless telecommunication network;
- receiving naming information for the sensor device from the mobile device through the wireless communication network;
- storing the naming information for the mobile device. According to preferred embodiments, the service gateway is further adapted for
- retrieving contact information for the mobile device, based on the sensor identification information;
- forwarding sensor identification information to the mobile device, based on the contact information.

According to preferred embodiments, the service gateway is further adapted for forwarding a request for receiving authentication information for the sensor device, to the mobile device, and for receiving the authentication information.

According to preferred embodiments, the service gateway is adapted for performing forwarding a request for receiving authentication information and forwarding the sensor identification information at the same time, and for performing receiving the naming information and receiving the authentication information are performed at the same time.

According to preferred embodiments, the service gateway is adapted for forwarding the sensor identification information to a mobile device, and for receiving naming information for the sensor device from the mobile device, by sending and receiving text messages.

According to preferred embodiments, the service gateway is further adapted for;
- sending service gateway identification information and the sensor identification information to a remote management server, for performing authentication for the sensor device, based on the service gateway identification information and the sensor identification information, and, if it is found that the sensor can be authenticated, for retrieving contact information for the mobile device, based on service gateway information, and for interacting with the mobile device in order to retrieve sensor naming information, based on said contact information, by the remote management server; and
- receiving at least one of authentication information and naming information for the sensor device from the remote management server.

According to preferred embodiments, the service gateway is further adapted for using the naming information when referring to the sensor device while interfacing with the user.

According to a third aspect of the present disclosure, the remote management server is disclosed adapted for remotely managing a service gateway according the second aspect, further adapted for
- receiving service gateway identification information and the sensor identification information from the service gateway;
- performing authentication for the sensor device, based on the service gateway identification information and the sensor identification information; and,
- if it is found that the sensor can be authenticated, for retrieving contact information for a mobile device, based on service gateway information; and
- for interacting with the mobile device in order to retrieve sensor naming information, based on the contact information; and
- for sending at least one of authentication information and naming information for the sensor device to the service gateway.

According to a fourth aspect of the present disclosure, a computer program is disclosed comprising a code for performing the methods according to the first aspect, when run on a computer. Also a data storage comprising such a program is disclosed.

A method, a service gateway, a remote management server and computer program product are described in claims 1, 9, 14 and 15.

Further aspects of the present disclosure are described by the dependent claims. The features from the dependent claims, features of any of the independent claims and any features of other dependent claims may be combined as considered appropriate to the person of ordinary skill, and not only in the particular combinations as defined by the claims.

### Brief description of the drawings

The accompanying drawings are used to illustrate embodiments of the present disclosure.
Fig. 1 illustrates a preferred embodiment of the present disclosure.
Figures 2 and 3 illustrate more specific embodiments according to the present disclosure.
Figures 4 and 5 illustrate more detailed call flows corresponding to the embodiments of the present disclosure.

### Description of illustrative embodiments

The description of aspects of the present invention is performed by means of particular embodiments and with reference to certain drawings but the invention is not limited thereto. Depicted figures are only schematic and should not be considered as limiting.

For the purpose of the present disclosure, the following terms are defined below.

The OSGi framework is a module system and service platform for the Java programming language that implements a complete and dynamic component model, something that does not exist in standalone Java/VM environments. Applications or components (coming in the form of bundles for deployment) can be remotely installed, started, stopped, updated and uninstalled without requiring a reboot; management of Java packages/classes is specified in great detail. Life cycle management is done via APIs which allow for remote downloading of management policies. The service registry allows bundles to detect the addition of new services, or the removal of services, and adapt accordingly.

An SMS gateway is an apparatus which allows sending a text message with or without using a mobile (cell) phone. Specifically, it is a device or service offering SMS transit, transforming messages to mobile network traffic from other media, or vice versa, allowing transmission or receipt of SMS messages with or without the use of a mobile phone. Typical use of a gateway would be to forward simple e-mail to a mobile phone recipient.

The TR-069 Remote Management Protocol comprises an object-model on which Remote Procedure Calls (RPC's) are invoked. TR-069 defines through the usage of RPC's, a generic mechanism by which an HDM(Home Device Manager) can read or write Parameters to configure a CPE and monitor CPE status and statistics. The TR-069 protocol has been defined by the Broadband Forum. The latest public version of the protocol is issue 1, amendment 3, Issue Date: November 2010 Protocol Version: 1.2.

A home service gateway(HSG) is a home networking device, used as a gateway to connect devices in the home to the

Internet or other WAN with the possibility to enable services in the home e.g. domotics, ...

The Sensor Abstraction Layer (SAL) is a functionality which groups and makes abstraction of different sensor-specific properties and communication details within a common framework, thereby providing a simple programming interface to access and pilot sensors, regardless of their specific technology.

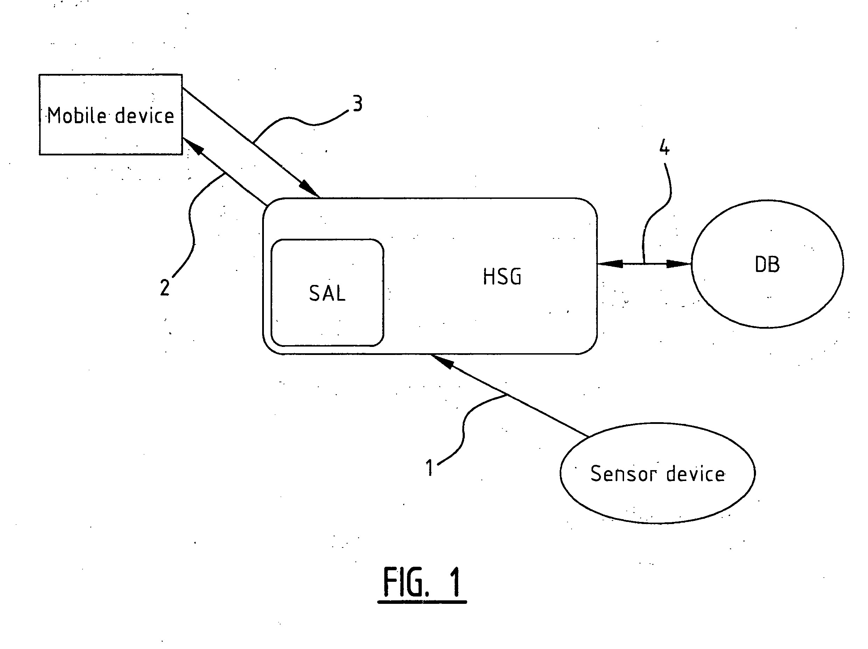

Fig. 1 illustrates embodiments of the present disclosure. A sensor device is added into a home network. The home service gateway detects the presence of the new sensor, and receives or retrieves identification information from said sensor device (1). The use of a Sensor Abstraction Layer can make the detection of the new sensor and the communication between the sensor and the HSG formally independent of the actual network technology by which the sensor is attached or communicating to the home service gateway. The HSG then forwards the sensor identification information to the mobile device (2). This can be performed for instance through a mobile telecommunication network. A short messaging service (SMS) message may for instance be sent to the mobile device. The user or the mobile device then responds by indication the requested name for the respective sensor (3). The HSG then stores the designated name (naming information) in database (DB) (4) for further use. When the HSG needs to interface with the user, and referring to the sensor node is appropriate, the HSG can retrieve and use the name designated by the user.

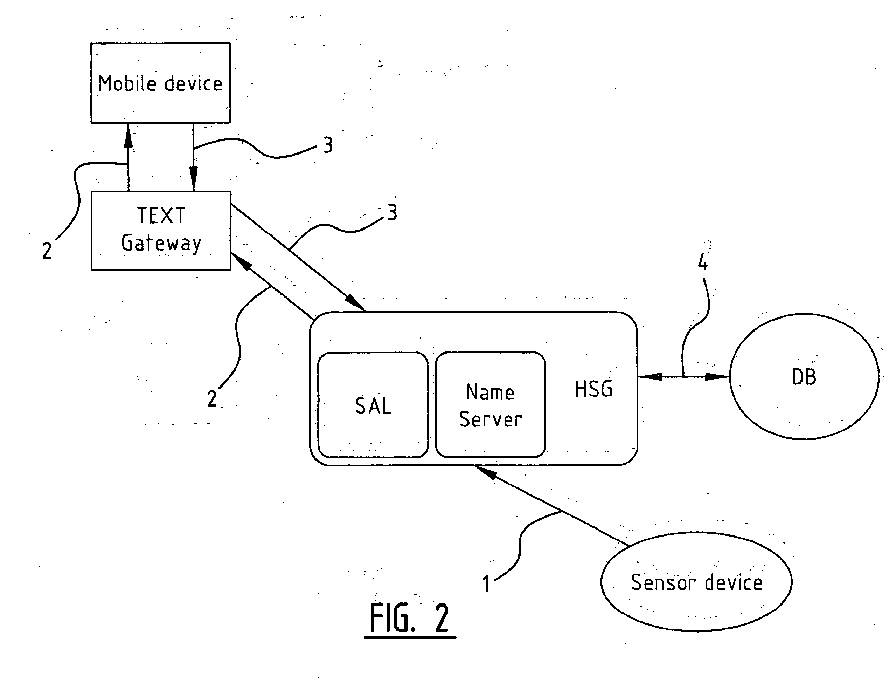

Fig. 2 illustrates embodiment of a first type according to the present disclosure. The HSG comprises a memory of data storage in which predetermined information has been stored and from which it can be retrieved, the predetermined information comprising contact information for a mobile device. The mobile device can for instance be associated to a user which has network configuration and management privileges. The HSG can then directly send the sensor device identification information retrieved from said sensor device to the mobile device, for instance by sending a text message such as for instance an SMS message to the mobile device over a wireless telecommunication network (2). For instance an SMS gateway functionality may be involved. The mobile device then replies by sending a text message (e.g. SMS message) back to the HSG, specifying the name requested by the user for the sensor device. The name (naming information) is stored in a database for further use when interfacing with the user is required and reference is to be made to a particular sensor device.

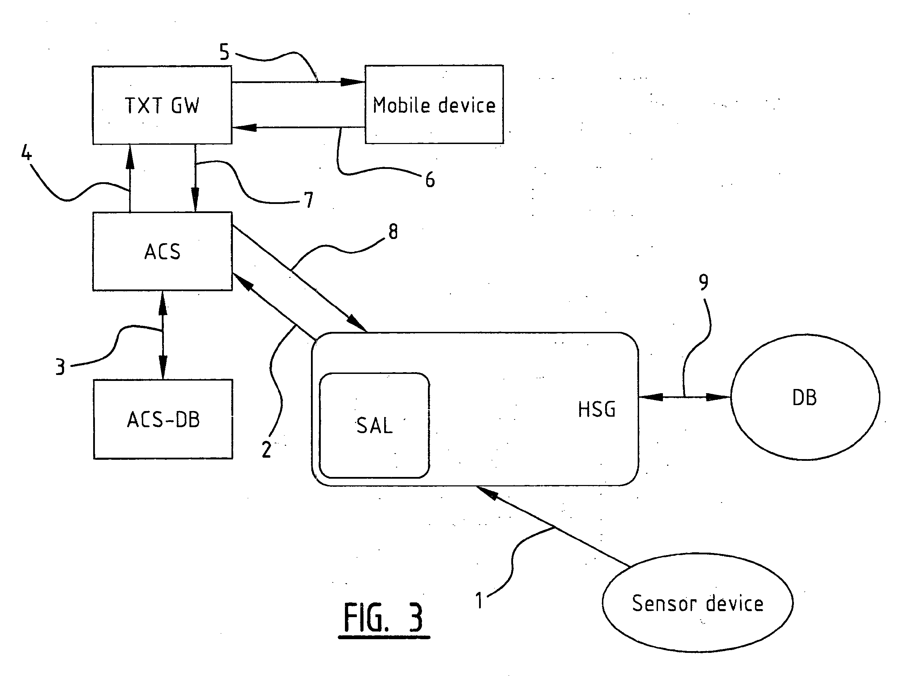

Fig. 3 illustrates an embodiment of the second type according to the present disclosure. Here, the new sensor device is detected by the SAL in the HSG, and sensor identification information (e.g. MAC address) of the device is retrieved by the HSG (1). The HSG also comprises HSG identification information. Both HSG identification information and sensor identification information are forwarded to a remote management server for said HSG (2). The remote management server, for instance a TR-069 compatible automatic configuration server (ACS), then performs authorization of the sensor, based on HSG identification information and sensor node identification information. He can therefore consult a dedicated database (ACS-DB) (3). If the sensor device can be authorised for access to the local network, the remote management server exchanges text messages with the mobile device in order to retrieve the requested naming information for the already authorised sensor (4,5 - 6,7). The ACS forwards the naming information to the HSG (8), which stores it in a database for later use (9).

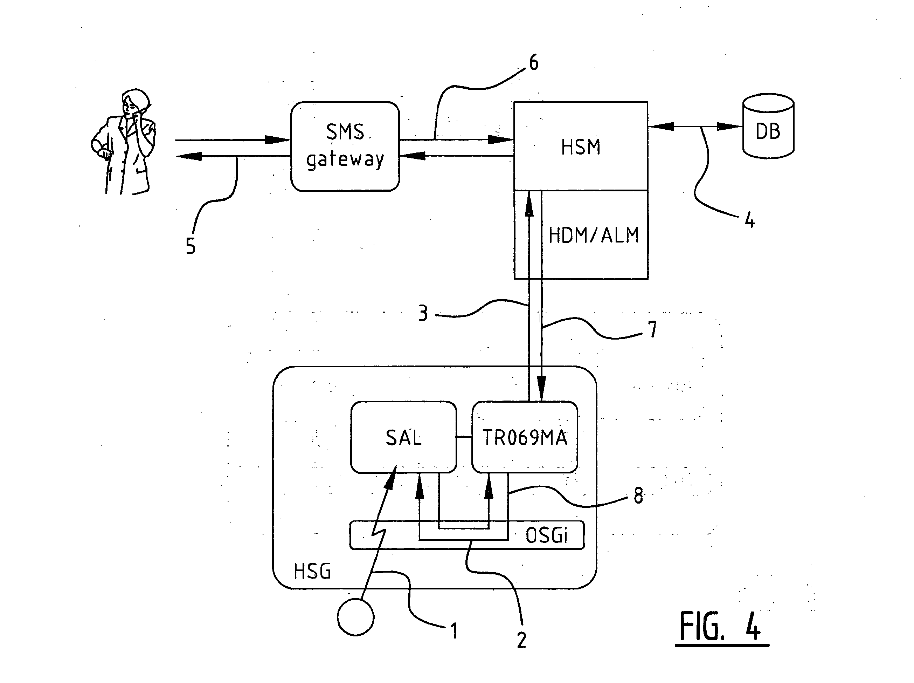

Fig. 4 illustrates a first example, corresponding substantially with the scenario described in Fig. 3.

The HSG is installed at the premises of the user. On the HSG the TR-069 management agent is up and running with connection to the back end. The SAL is up and running listing to new sensor device add events. The user is configured in the Home Sensor Manager (HSM) with a list of sensor devices that are allowed to be connect in his home. The user brings a new sensor device for installation in his house, for example weight scale with Bluetooth capabilities. The following steps can be performed:
(1) User activates the sensor device in his home, and the HSG SAL is detecting the new sensor device;
(2) SAL sends the MAC address of the scale to TR069mAgent as new sensor device added;
(3) TR069mAgent sends active notification to HDM/ALM (e.g. ACS);
(4) HSM (Home Sensor Manager, for instance comprised in the ACS, but can also be a standalone application further in the IP cloud that communicates with the ACS) checks whether the MAC Address is allowed at the user (Authorization). HSM retrieves this information out of the database. There exist a coupling or association of user information | HSG identification information | allowed sensor devices information in the database. If authorization fails, information indicating an unsuccessful naming is send back to HSG. The result is that the sensor device will not be recognized and will be rejected by SAL. The application can then not access the sensor device.
(5) If the authorization is successful, the HSM retrieves the SMS number of user and sends SMS to his mobile requesting a name for the sensor device, the message preferably comprising MAC address and HSG identification information.
(6) The user/ mobile device replies with naming information. When the HSM receives naming information back e.g. by SMS, the name (naming information) is stored in a database associated with the HSM.
(7) HSM sets the name in the HSG trough the HDM/ALM (application lifecycle management)/TR069mAgent in the SAL;
(8) When the SAL receives the set request, it will allow application to access the sensor device in the home.

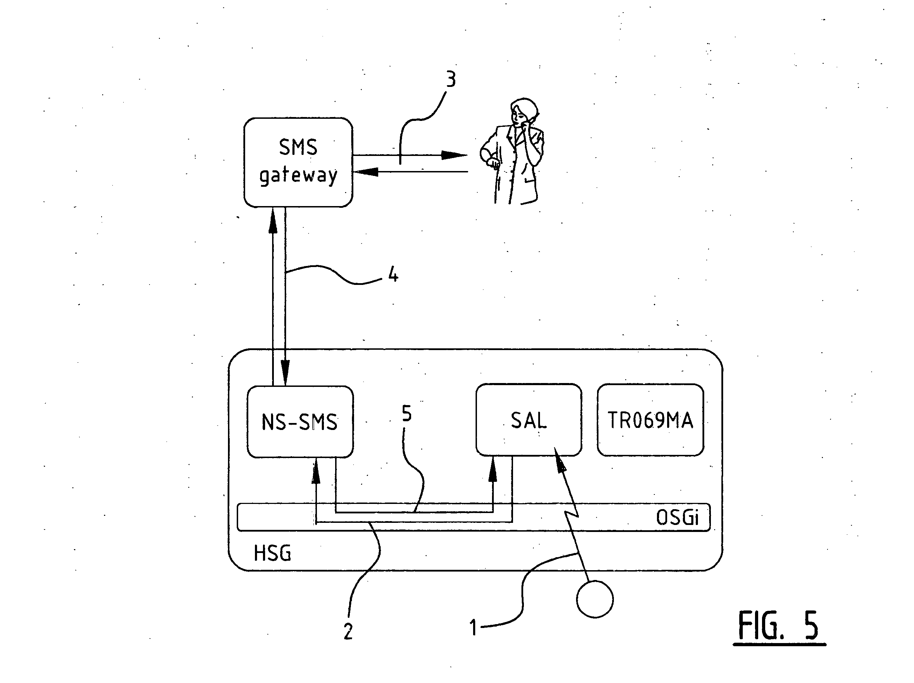

Fig. 5 illustrates a second example, corresponding substantially with the scenario described in Fig. 2. The sensor abstraction layer is up and running. An TR-069 management agent (TR-069mAgent) is present and performed the configuration of the SAL to send new sensor events to NS-SMS(Name Server) application running on the OSGi platform. The NS-SMS(Name Server) is configured with user data(example: GSM number).

A user brings a new sensor device for installation in his house, for example a weight scale with Bluetooth capabilities.
(1) User activates the sensor device in his home, and the HSG SAL is detecting the new sensor device;
(2) SAL sends the MAC address of the scale to name server (NS-SMS) as new sensor device added;
(3) NS-SMS sends SMS to mobile of user with MAC Address of sensor device;
(4) NS-SMS server receives SMS back from user and informs SAL with the name of the sensor;
(5) SAL accepts the new sensor devices: all application can from now on access the new sensor device in the home, which can be identified by the naming information provided by the user.

It can be noted than instead of using SMS, email messages could be used in the alternative.

## Claims

1. A method for associating name information to a sensor device in a local network, said local network being connected to an access network by means of a service gateway (HSG), and said service gateway (HSG) being adapted for communicating with said sensor device, comprising performing at said service gateway:
- receiving sensor identification information for said sensor device;
- forwarding said sensor identification information to a mobile device of a user, through a wireless telecommunication network;
- receiving naming information for said sensor device from said mobile device through said telecommunication network;
- storing said naming information for said sensor device.

2. A method according to claim 1, further comprising
- Retrieving contact information for said mobile device;
- forwarding sensor identification information to said mobile device, based on said contact information.

3. A method according to claim 2, further comprising forwarding a request for receiving authentication information for said sensor device, to said mobile device, and receiving said authentication information.

4. A method according to claim 3, wherein said forwarding a request for receiving authentication information and forwarding said sensor identification information are performed at the same time, and wherein receiving naming information and receiving said authentication information are performed at the same time.

5. A method according to any of the previous claims, wherein forwarding said sensor identification information to a mobile device, and receiving naming information for said sensor device from said mobile device comprises sending and receiving text messages, such as SMS or email.

6. A method according to claim 1, comprising
- sending service gateway identification information and said sensor identification information to a.remote management server (HSM), said remote management server (HSM) performing authentication for said sensor device, based on said service gateway identification information and said sensor identification information, and, if it. is found that said sensor device can be authenticated, retrieving contact information for said mobile device, based on service gateway information, and interacting with said mobile device in order to retrieve sensor naming information;
- receiving at least one of authentication information and naming information for said sensor device from said remote management server.

7. A method according to claim 6, wherein interacting with said mobile device in order to retrieve sensor naming information by said remote management server, comprises exchanging text messages with said mobile device.

8. A method according to any of the previous claims, further comprising interfacing with said user using said naming .information for referring to said sensor device.

9. A service gateway (HSG) for use as a gateway between a local network being connected to an access network, said local network comprising at least one sensor device, wherein said service gateway is adapted for;
- communicating with said sensor.device;
- receiving sensor identification information for said senior device;
- forwarding said sensor identification information to a mobile device associated to a user through a wireless telecommunication network;
- receiving naming information for said sensor device from said mobile device through said wireless communication network;
- storing said naming information for said sensor device.

10. A Service gateway according to claim 9, further being adapted for
- retrieving contact information for said mobile device;
- forwarding sensor identification information to said mobile device, based on said contact information.

11. A Service gateway according to any of claims 9 or 10, which is further adapted for forwarding a request for receiving authentication information for said sensor device, to said mobile device, and for receiving said authentication information.

12. A Service gateway according to any of claims 9 to 11, adapted for performing forwarding a request for receiving authentication information and forwarding said sensor identification information at the same time, and for performing receiving said naming information and receiving said authentication information are performed at the same time.

13. A Service gateway according to claim 9, further being adapted for
- sending service gateway identification information and said sensor identification information to a remote management server (HSM), said remote management server (HSM) performing authentication for said sensor device, based on said service gateway identification information and said sensor identification information, and, if it is found that said sensor device can be authenticated, retrieving contact information for said mobile device, based on service gateway information, and interacting with said mobile device in order to retrieve sensor naming information;
- receiving at least one of authentication information and naming information for said sensor device from said remote management server.

14. A remote management server (HSM) adapted for remotely managing a service gateway (HSG) according to any of the claims 9 to 13, further adapted for
- receiving service gateway identification information and sensor identification information for a sensor device from said service gateway;
- performing authentication for said sensor device, based on said service gateway identification information and said sensor identification information; and,
- for retrieving, if it is found that said sensor device can be authenticated, contact information for a mobile device, based on service gateway information; and
- for interacting with said mobile device in order to retrieve sensor naming information, based on said contact information; and
- sending at least one of authentication information and naming information for said sensor device to said service gateway.

15. A computer program product comprising a code for performing the methods according to any of the claims 1 to 8, when run on a computer.

## Patentansprüche

1. Verfahren zur Assoziation von Namensinformationen mit einer Sensorvorrichtung in einem lokalen Netzwerk, wobei das lokale Netzwerk über ein Dienst-Gateway (HSG) an ein Zugangsnetzwerk angeschlossen ist, und wobei das besagte Dienst-Gateway (HSG) für die Kommunikation mit der besagten Sensorvorrichtung ausgelegt ist, umfassend das Durchführen, an dem besagten Dienst-Gateway, der folgenden Schritte:
- Empfangen von Sensorkennungsinformationen für die besagte Sensorvorrichtung;
- Weiterleiten der besagten Sensorkennungsinformationen an eine mobile Vorrichtung eines Benutzers über ein drahtloses Telekommunikationsnetzwerk;
- Empfangen von Namensinformationen für die besagte Sensorvorrichtung von der besagten mobilen Vorrichtung über das besagte Telekommunikationsnetzwerk,
- Speichern der besagten Namensinformationen für die besagte Sensorvorrichtung.

2. Verfahren nach Anspruch 1, weiterhin umfassend:
- Abfragen von Kontaktinformationen für die besagte mobile Vorrichtung;
- Weiterleiten der Sensorkennungsinformationen an die besagte mobile Vorrichtung auf der Basis der besagten Kontaktinformationen.

3. Verfahren nach Anspruch 2, weiterhin umfassend das Weiterleiten einer Anforderung für den Empfang von Authentifikationsinformationen für die besagte Sensorvorrichtung an die besagte mobile Vorrichtung, und das Empfangen der besagten Authentifikationsinformationen.

4. Verfahren nach Anspruch 3, wobei das besagte Weiterleiten einer Anforderung für den Empfang von Authentifikationsinformationen und das Weiterleiten der besagten Sensorkennungsinformationen gleichzeitig erfolgen, und wobei der Empfang von Namensinformationen und der Empfang der besagten Authentifikationsinformationen gleichzeitig stattfinden.

5. Verfahren nach einem beliebigen der vorstehenden Ansprüche, wobei das Weiterleiten der besagten Sensorkennungsinformationen an eine mobile Vorrichtung und das Empfangen von Namensinformationen für die besagte Sensorvorrichtung von der besagten mobilen Vorrichtung das Senden und Empfangen von Textnachrichten wie beispielsweise als SMS oder E-Mail umfasst.

6. Verfahren nach Anspruch 1, umfassend:
- Senden von Dienst-Gateway-Kennungsinformationen und der besagten Sensorkennungsinformationen an einen Fernverwaltungsserver (HSM), wobei der besagte Fernverwaltungsserver (HSM) die Authentifikation für die besagte Sensorvorrichtung auf der Basis der besagten Dienst-Gateway-Kennungsinformationen und der besagten Sensorkennungsinformationen durchführt, und, wenn festgestellt wird, dass die besagte Sensorvorrichtung nicht authentifiziert werden kann, Abfragen von Kontaktinformationen für die besagte mobile Vorrichtung auf der Basis von Dienst-Gateway-Informationen, und Zusammenwirken mit der besagten mobilen Vorrichtung, um Sensornamensinformationen abzufragen;
- Empfangen von mindestens entweder Authentifikationsinformationen oder Namensinformationen für die besagte Sensorvorrichtung von dem besagten Fernverwaltungsserver.

7. Verfahren nach Anspruch 6, wobei das Zusammenwirken mit der besagten mobilen Vorrichtung für das Abfragen von Sensornamensinformationen durch den besagten Fernverwaltungsserver das Austauschen von Textinformationen mit der besagten mobilen Vorrichtung umfasst.

8. Verfahren nach einem beliebigen der vorstehenden Ansprüche, weiterhin umfassend das Kommunizieren mit dem besagten Benutzer über eine Schnittstelle unter Verwendung der besagten Namensinformationen in Bezug auf die besagte Sensorvorrichtung.

9. Dienst-Gateway (HSG) zur Verwendung als ein Gateway zwischen einem lokalen Netzwerk, welches an ein Zugangsnetzwerk angeschlossen ist, wobei das besagte lokale Netzwerk mindestens eine Sensorvorrichtung umfasst, wobei das besagte Dienst-Gateway für das Durchführen der folgenden Schritte ausgelegt ist:
- Kommunizieren mit der besagten Sensorvorrichtung;
- Empfangen von Sensorkennungsinformationen für die besagte Sensorvorrichtung;
- Weiterleiten der besagten Sensorkennungsinformationen an eine mit einem Benutzer assoziierte mobile Vorrichtung über ein drahtloses Telekommunikationsnetzwerk;
- Empfangen von Namensinformationen für die besagte Sensorvorrichtung von der besagten mobilen Vorrichtung über das besagte drahtlose Kommunikationsnetzwerk;
- Speichern der besagten Namensinformationen für die besagte Sensorvorrichtung.

10. Dienst-Gateway nach Anspruch 9, weiterhin für die folgenden Schritte ausgelegt:
- Abfragen von Kontaktinformationen für die besagte mobile Vorrichtung;
- Weiterleiten der Sensorkennungsinformationen an die besagte mobile Vorrichtung auf der Basis der besagten Kontaktinformationen.

11. Dienst-Gateway nach einem beliebigen der Ansprüche 9 oder 10, welche weiterhin für das Weiterleiten einer Anforderung für den Empfang von Authentifikationsinformationen für die besagte Sensorvorrichtung an die besagte mobile Vorrichtung und für das Empfangen der besagten Authentifikationsinformationen ausgelegt ist.

12. Dienst-Gateway nach einem beliebigen der Ansprüche 9 bis 11, ausgelegt für das gleichzeitige Durchführen der Weiterleitung einer Anforderung für den Empfang von Authentifikationsinformationen und der Weiterleitung der besagten Sensorkennungsinformationen, und für das gleichzeitige Durchführen des Empfangs der besagten Namensinformationen und des Empfangs der besagten Authentifikationsinformationen.

13. Dienst-Gateway nach Anspruch 9, weiterhin für das Durchführen der folgenden Schritte ausgelegt:
- Senden von Dienst-Gateway-Kennungsinformationen und der besagten Sensorkennungsinformationen an einen Fernverwaltungsserver (HSM), wobei der besagte Fernverwaltungsserver die Authentifikation für die besagte Sensorvorrichtung auf der Basis der besagten Dienst-Gateway-Kennungsinformationen und der besagten Sensorkennungsinformationen durchführt, und, wenn festgestellt wird, dass die besagte Sensorvorrichtung authentifiziert werden kann, Abfragen von Kontaktinformationen für die besagte mobile Vorrichtung auf der Basis von Dienst-Gateway-Informationen, und Zusammenwirken mit der besagten mobilen Vorrichtung, um die Sensornamensinformationen abzufragen;
- Empfangen von mindestens entweder Authentifikationsinformationen oder Namensinformationen für die besagte Sensorvorrichtung von dem besagten Fernverwaltungsserver.

14. Fernverwaltungsserver (HSM), ausgelegt für die ferngesteuerte Verwaltung eines Dienst-Gateways (HSG) gemäß einem beliebigen der Ansprüche 9 bis 13, weiterhin für das Durchführen der folgenden Schritte ausgelegt:
- Empfangen von Dienst-Gateway-Kennungsinformationen und Sensorkennungsinformationen für eine Sensorvorrichtung von dem besagten Dienst-Gateway;
- Durchführen der Authentifikation für die besagte Sensorvorrichtung auf der Basis der besagten Dienst-Gateway-Kennungsinformationen und der besagten Sensorkennungsinformationen und, wenn festgestellt wird, dass die besagte Sensorvorrichtung authentifiziert werden kann, Abfragen der Kontaktinformationen für eine mobile Vorrichtung auf der Basis der Dienst-Gateway-Informationen; und
- Zusammenwirken mit der besagten mobilen Vorrichtung, um die besagten Sensornamensinformationen auf der Basis der Kontaktinformationen abzufragen; und
- Senden mindestens entweder der Authentifikationsinformationen oder der Namensinformationen für die besagte Sensorvorrichtung an die besagte Dienst-Gateway.

15. Computerprogramm-Produkt mit einem Code zum Durchführen der Verfahren gemäß einem beliebigen der Ansprüche 1 bis 8, wenn es auf einem Computer ausgeführt wird.

## Revendications

1. Procédé pour associer des informations de nom à un dispositif capteur dans un réseau local, ledit réseau local étant connecté à un réseau d'accès au moyen d'une passerelle de service (HSG), et ladite passerelle de service (HSG) étant adaptée pour communiquer avec ledit dispositif capteur, comprenant l'exécution des étapes suivantes au niveau de ladite passerelle de service :
- recevoir des informations d'identification de capteur pour ledit dispositif capteur ;
- transférer lesdites informations d'identification de capteur vers un dispositif mobile d'un utilisateur, à travers un réseau de télécommunication sans fil ;
- recevoir des informations de dénomination pour ledit dispositif capteur à partir dudit dispositif mobile à travers ledit réseau de télécommunication ;
- stocker lesdites informations de dénomination pour ledit dispositif capteur.

2. Procédé selon la revendication 1, comprenant en outre les étapes suivantes :
- récupérer des informations de contact pour ledit dispositif mobile ;
- transférer des informations d'identification de capteur vers ledit dispositif mobile, sur la base desdites informations de contact.

3. Procédé selon la revendication 2, comprenant en outre le transfert d'une demande de réception d'informations d'authentification pour ledit dispositif capteur, vers ledit dispositif mobile, et la réception desdites informations d'authentification.

4. Procédé selon la revendication 3, dans lequel ledit transfert d'une demande de réception d'informations d'authentification et ledit transfert desdites informations d'identification de capteur sont réalisés simultanément, et dans lequel la réception d'informations de dénomination et la réception desdites informations d'authentification sont réalisées simultanément.

5. Procédé selon l'une quelconque des revendications précédentes, dans lequel le transfert desdites informations d'identification de capteur vers un dispositif mobile, et la réception d'informations de dénomination pour ledit dispositif capteur à partir dudit dispositif mobile comprennent l'envoi et la réception de messages texte, tels que des SMS ou des courriers électroniques.

6. Procédé selon la revendication 1, comprenant les étapes suivantes :
- envoyer des informations d'identification de passerelle de service et lesdites informations d'identification de capteur vers un serveur de gestion à distance (HSM), ledit serveur de gestion à distance (HSM) effectuant l'authentification pour ledit dispositif capteur, sur la base desdites informations d'identification de passerelle de service et desdites informations d'identification de capteur, et, si l'on découvre que ledit dispositif capteur peut être authentifié, récupérer des informations de contact pour ledit dispositif mobile, sur la base d'informations de passerelle de service, et interagir avec ledit dispositif mobile afin de récupérer des informations de dénomination de capteur ;
- recevoir au moins des informations d'authentification ou des informations de dénomination pour ledit dispositif capteur à partir dudit serveur de gestion à distance.

7. Procédé selon la revendication 6, dans lequel l'interaction avec ledit dispositif mobile afin de récupérer des informations de dénomination de capteur par ledit serveur de gestion à distance, comprend l'échange de messages texte avec ledit dispositif mobile.

8. Procédé selon l'une quelconque des revendications précédentes, comprenant en outre l'interfaçage avec ledit utilisateur en utilisant lesdites informations de dénomination pour désigner ledit dispositif capteur.

9. Passerelle de service (HSG) à utiliser comme passerelle entre un réseau local connecté à un réseau d'accès, ledit réseau local comprenant au moins un dispositif capteur, ladite passerelle de service étant adaptée pour ;
- communiquer avec ledit dispositif capteur ;
- recevoir des informations d'identification de capteur pour ledit dispositif capteur ;
- transférer lesdites informations d'identification de capteur vers un dispositif mobile associé à un utilisateur à travers un réseau de télécommunication sans fil ;
- recevoir des informations de dénomination pour ledit dispositif capteur à partir dudit dispositif mobile à travers ledit réseau de communication sans fil ;
- stocker lesdites informations de dénomination pour ledit dispositif capteur.

10. Passerelle de service selon la revendication 9, étant en outre adaptée pour
- récupérer des informations de contact pour ledit dispositif mobile ;
- transférer des informations d'identification de capteur vers ledit dispositif mobile, sur la base desdites informations de contact.

11. Passerelle de service selon l'une quelconque des revendications 9 et 10, qui est en outre adaptée pour transférer une demande de réception d'informations d'authentification pour ledit dispositif capteur, vers ledit dispositif mobile, et pour recevoir lesdites informations d'authentification.

12. Passerelle de service selon l'une quelconque des revendications 9 à 11, adaptée pour effectuer le transfert d'une demande de réception d'informations d'authentification et le transfert desdites informations d'identification de capteur simultanément, et pour effectuer la réception desdites informations de dénomination et la réception desdites informations d'authentification simultanément.

13. Passerelle de service selon la revendication 9, étant en outre adaptée pour
- envoyer des informations d'identification de passerelle de service et lesdites informations d'identification de capteur vers un serveur de gestion à distance (HSM), ledit serveur de gestion à distance (HSM) effectuant l'authentification pour ledit dispositif capteur, sur la base desdites informations d'identification de passerelle de service et desdites informations d'identification de capteur, et, si l'on découvre que ledit dispositif capteur peut être authentifié, récupérer des informations de contact pour ledit dispositif mobile, sur la base d'informations de passerelle de service, et interagir avec ledit dispositif mobile afin de récupérer des informations de dénomination de capteur ;
- recevoir au moins des informations d'authentification ou des informations de dénomination pour ledit dispositif capteur à partir dudit serveur de gestion à distance.

14. Serveur de gestion à distance (HSM) adapté pour gérer à distance une passerelle de service (HSG) selon l'une quelconque des revendications 9 à 13, étant en outre adapté pour
- recevoir des informations d'identification de passerelle de service et des informations d'identification de capteur pour un dispositif capteur à partir de ladite passerelle de service ;
- effectuer l'authentification pour ledit dispositif capteur, sur la base desdites informations d'identification de passerelle de service et desdites informations d'identification de capteur ; et,
- pour récupérer, si l'on découvre que ledit dispositif capteur peut être authentifié, des informations de contact pour un dispositif mobile, sur la base d'informations de passerelle de service ; et
- pour interagir avec ledit dispositif mobile afin de récupérer des informations de dénomination de capteur, sur la base desdites informations de contact ; et
- envoyer au moins des informations d'authentification ou des informations de dénomination pour ledit dispositif capteur à ladite passerelle de service.

15. Produit de programme informatique comprenant un code pour exécuter les procédés selon l'une quelconque des revendications 1 à 8, lorsqu'il est exécuté sur un ordinateur.
